# EUROPÄISCHE PATENTSCHRIFT

(11) **EP 3 827 485 B1**
(45) Veröffentlichungstag und Bekanntmachung des Hinweises auf die Patenterteilung: **06.09.2023**
(21) Anmeldenummer: 19739312.7
(22) Anmeldetag: 17.07.2019
(51) Int. Cl.: H01R 43/28, H02G 1/12

(54) **ENTNAHMEWANNE FÜR EIN KABELVERARBEITUNGSMASCHINENSYSTEM, KABELVERARBEITUNGSMASCHINENSYSTEM UND VERFAHREN ZUM ENTNEHMEN VON EINEM ODER MEHREREN KABELN AUS EINER ENTNAHMEWANNE**
REMOVAL TRAY FOR A CABLE PROCESSING MACHINE SYSTEM, CABLE PROCESSING MACHINE SYSTEM AND METHOD FOR REMOVING ONE OR MORE CABLES FROM A REMOVAL TRAY
BAC DE RÉCEPTION POUR UN SYSTÈME DE MACHINE DE TRAITEMENT DU CÂBLE, SYSTÈME DE MACHINE DE TRAITEMENT DU CÂBLE ET PROCÉDÉ DE RÉCEPTION D'UN OU D'UNE PLURALITÉ DE CÂBLE D'UN BAC DE RÉCEPTION

(30) Priorität: 24.07.2018 EP 18185278
(43) Veröffentlichungstag der Anmeldung: 02.06.2021
(73) Patentinhaber: komax Holding AG, 6036 Dierikon (CH)
(72) Erfinder: CONTE, Alois, 6030 Ebikon (CH)
(74) Vertreter: Inventio AG
(86) Internationale Anmeldenummer: PCT/EP2019/069268
(87) Internationale Veröffentlichungsnummer: WO 2020/020726

(56) Entgegenhaltungen:
- EP-A2- 0 788 200
- US-A1- 2001 032 680

## Beschreibung

Die vorliegende Erfindung betrifft eine Entnahmewanne für ein Kabelverarbeitungsmaschinensystem, ein Kabelverarbeitungsmaschinensystem und ein Verfahren zum Entnehmen von einem oder mehreren Kabeln aus einer Entnahmewanne.

Verarbeitete Kabel, z.B. gecrimpte Kabel, gelangen bei einer Kabelverarbeitungsmaschine, z.B. einer Crimpmaschine, zunächst in eine Kabelablage und werden danach aus der Kabelablage in eine Entnahmewanne geschüttet. In der Entnahmewanne werden mehrere Kabel angesammelt, bis ein sogenanntes Fertigungslos bzw. Los, d.h. eine vorgegebene Anzahl, von Kabeln in der Entnahmewanne gesammelt wurde. Eine Entnahmewanne für ein Kabelverarbeitungsmaschinensystem, welche zum Aufnehmen von verarbeiten Kabeln ausgebildet ist, zeigt die US 2001/032680 A1.

Danach muss der Betrieb der Kabelverarbeitungsmaschine gestoppt werden, bis die Kabel aus der Entnahmewanne manuell bzw. händisch herausgenommen bzw. entnommen wurden, um eine Vermischung unterschiedlicher Lose von Kabeln zu vermeiden.

Dies führt zu oftmaligen Unterbrechungen des Betriebs der Kabelverarbeitungsmaschine. Ein automatisiertes bzw. maschinelles Entnehmen von Kabeln aus bisher bekannten Entnahmewannen für Kabelverarbeitungsmaschine ist technisch sehr aufwändig bis nahezu unmöglich.

Es kann unter anderem ein Bedarf an einer Entnahmewanne für ein Kabelverarbeitungsmaschinensystem bzw. einem Kabelverarbeitungsmaschinensystem bzw. einem Verfahren bestehen, bei der bzw. bei dem bzw. mittels dem Kabel technisch einfach und schnell automatisiert bzw. maschinell aus der Entnahmewanne entnommen werden können.

Einem solchen Bedarf kann durch eine Entnahmewanne für ein Kabelverarbeitungsmaschinensystem gemäß dem unabhängigen Anspruch 1 bzw. ein Kabelverarbeitungsmaschinensystem gemäß dem unabhängigen Anspruch 10 bzw. ein Verfahren gemäß Anspruch 13 entsprochen werden. Vorteilhafte Ausführungsformen sind in den abhängigen Ansprüchen definiert.

Gemäß einem Aspekt der Erfindung wird eine Entnahmewanne für ein Kabelverarbeitungsmaschinensystem vorgeschlagen, wobei die Entnahmewanne zum Aufnehmen von von einer Kabelverarbeitungsmaschine des Kabelverarbeitungsmaschinensystems verarbeiten Kabeln ausgebildet ist, wobei Seitenwände der Entnahmewanne jeweils eine oder mehrere Ausnehmungen und/oder Einbuchtungen zum maschinellen Greifen der Kabel in der Entnahmewanne mittels eines Greifarms aufweisen.

Ein Vorteil hiervon ist, dass die Kabel bzw. die Lose von Kabeln typischerweise technisch einfach und schnell aufgrund der Form der Entnahmewanne automatisiert bzw. maschinell der Entnahmewanne entnommen werden können. Ein Teil eines Greifers bzw. eines Greifarms kann üblicherweise in die Vertiefungen und/oder Einbuchtungen der Seitenwand bzw. Seitenwände der Entnahmewanne eingeführt werden, so dass der Greifer bzw. Greifarm die Kabel bzw. Lose von Kabeln technisch einfach ergreifen und halten kann sowie anschließend die Kabel aus der Entnahmewanne bewegen kann. Durch die Möglichkeit, die Kabel automatisiert bzw. maschinell aus der Entnahmewanne zu entfernen, muss der Betrieb der Kabelverarbeitungsmaschine in der Regel nicht unterbrochen werden, wenn ein Los von Kabeln fertig hergestellt wurde.

Gemäß zweitem Aspekt der Erfindung wird ein Kabelverarbeitungsmaschinensystem vorgeschlagen umfassend eine Kabelverarbeitungsmaschine zum Verarbeiten eines Kabels, und eine Entnahmewanne wie vorstehend beschrieben, wobei die Entnahmewanne zum Aufnehmen von von der Kabelverarbeitungsmaschine verarbeiteten Kabeln ausgebildet ist, und wobei die Entnahmewanne derart unterhalb einer Kabelablage der Kabelverarbeitungsmaschinensystem angeordnet ist, dass die Kabel aus der Kabelablage durch Drehen und/oder Schwenken der Kabelablage in die Entnahmewanne gelangen können.

Vorteilhaft hieran ist, dass die von der Kabelverarbeitungsmaschine verarbeiteten Kabel bzw. Lose von Kabeln typischerweise technisch einfach und schnell aufgrund der Form der Entnahmewanne automatisiert bzw. maschinell der Entnahmewanne entnommen werden können. Ein Teil eines Greifers bzw. eines Greifarms kann typischerweise in die Vertiefungen und/oder Einbuchtungen der Seitenwand bzw. Seitenwände der Entnahmewanne eingeführt werden, so dass der Greifer bzw. Greifarm die von der Kabelverarbeitungsmaschine verarbeiteten Kabel bzw. Lose von Kabeln technisch einfach ergreifen und halten kann sowie anschließend die Kabel aus der Entnahmewanne bewegen kann. Durch die Möglichkeit, die Kabel automatisiert bzw. maschinell aus der Entnahmewanne zu entfernen, muss der Betrieb der Kabelverarbeitungsmaschine in der Regel nicht unterbrochen werden, wenn ein Los von Kabeln fertig hergestellt wurde.

Gemäß dritten Aspekt der Erfindung wird ein Verfahren zum Entnehmen von einem oder mehreren Kabeln aus einer Entnahmewanne wie vorstehend beschrieben, eines Kabelverarbeitungsmaschinensystems vorgeschlagen, wobei die Entnahmewanne zum Aufnehmen von von einer Kabelverarbeitungsmaschine des Kabelverarbeitungsmaschinensystems verarbeiteten Kabeln ausgebildet und angeordnet ist, wobei das Verfahren folgende Schritte umfasst: Bewegen eines Teils des Greifarms in Vertiefungen und/oder Einbuchtungen der Entnahmewanne; Greifen von Kabeln, die sich in der Entnahmewanne befinden, mittels des Greifarms; und Bewegen des Greifarms mit den gegriffenen Kabeln aus der Entnahmewanne.

Ein Vorteil hiervon ist, dass durch das automatisierte bzw. maschinelle Greifen und Entfernen der Kabel aus der Entnahmewanne der Betrieb der Kabelverarbeitungsmaschine typischerweise nicht unterbrochen werden muss, wenn ein Los von Kabeln fertig hergestellt wurde. Durch das Verfahren können die Kabel in der Regel technisch einfach und schnell automatisiert bzw. maschinell aus der Entnahmewanne entfernt werden.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäß einer Ausführungsform der Entnahmewanne weist die Entnahmewanne eine rippenartige Struktur auf. Ein Vorteil hiervon ist, dass ein Teil eines Greifarms bzw. eines maschinellen Greifers typischerweise an mehreren Stellen der Entnahmewanne die Kabel technisch einfach ergreifen kann.

Gemäß einer Ausführungsform der Entnahmewanne weist die Entnahmewanne eine Vielzahl von Ausnehmungen und/oder Einbuchtungen in den Seitenwänden auf, die in der jeweiligen Seitenwand in gleichgroßen Abständen zueinander angeordnet sind. Vorteilhaft hieran ist, dass typischerweise ein zwei oder mehr Teile des Greifarms auf beiden Seiten der Seitenwände der Entnahmewanne bzw. beiden Seiten der Kabel die Kabel in der Entnahmewanne ergreifen können. Möglich ist in der Regel auch, dass mehrere Greifarme, insbesondere längere, Kabel gemeinsam ergreifen können und auf diese Weise die Kabel technisch einfach und schnell aus der Entnahmewanne gebracht werden können.

Gemäß einer Ausführungsform der Entnahmewanne weist eine Bodenfläche der Entnahmewanne, die zum teilweisen Aufliegen der Kabel in der Entnahmewanne ausgebildet ist, insbesondere in zueinander äquidistanten Abständen angeordnete, Ausnehmungen und/oder Einbuchtungen zum maschinellen Ergreifen einer einem Boden der Entnahmewanne zugewandten Seite der Kabel auf. Vorteilhaft hieran ist, dass ein Teil des Greifarms üblicherweise technisch einfach unter Teile bzw. Bereiche der Kabel gelangen können und somit die Kabel noch besser greifen und halten können.

Gemäß einer Ausführungsform der Entnahmewanne wurde die Entnahmewanne durch Tiefziehen hergestellt. Hierdurch können technisch einfach und kostengünstig sowie materialsparend die Vertiefungen und/oder Aussparungen der Entnahmewanne ausgebildet werden.

Gemäß einer Ausführungsform der Entnahmewanne ist die Entnahmewanne symmetrisch bezüglich einer Längsebene der Entnahmewanne ausgebildet, wobei die Längsebene entlang einer Längsachse der Kabel verläuft, wenn sich die Kabel in der Entnahmewanne befinden. Hierdurch kann die Entnahmewanne typischerweise technisch einfach installiert werden, da nicht auf die Ausrichtung der Entnahmewanne geachtet werden muss. Zudem können Teile des Greifarms in der Regel auf gleiche Weise in die beiden gegenüberliegenden Seitenwände der Entnahmewanne eingeführt werden. Auch hierbei muss auf die Ausrichtung des Greifarms bzw. die Bewegungsrichtung des Greifarms üblicherweise nicht geachtet werden, da beide Seitenwände symmetrisch ausgestaltet sind. Dies erleichtert in der Regel die Entnahme der Kabel aus der Entnahmewanne noch weiter.

Gemäß einer Ausführungsform der Entnahmewanne ist die Entnahmewanne aus mehreren Entnahmewannenteilen, insbesondere mehreren zueinander baugleichen Entnahmewannenteilen, zusammengesetzt. Vorteilhaft hieran ist, dass Teile der Entnahmewanne typischerweise technisch einfach austauschbar sind und somit Reparaturen schnell und kostengünstig durchgeführt werden können. Bei zueinander baugleichen Entnahmewannenteilen ist der Austausch bzw. die Reparatur üblicherweise noch einfacher, da an jeder Stelle der Entnahmewanne das gleiche Entnahmewannenbauteil verwendet werden kann.

Erfindungsgemäss sind die Ausnehmungen und/oder Einbuchtungen in den Seitenwänden derart ausgebildet, dass an den Stellen der Ausnehmungen und/oder Einbuchtungen die Seitenwände jeweils zur Seite hin offen sind. Vorteilhaft hieran ist, dass ein Greifarm üblicherweise technisch einfach von den Seiten der Entnahmewanne her eingeführt werden kann und/oder ein Greifarm die in der Entnahmewanne befindlichen Kabel technisch einfach von zwei gegenüberliegenden Seiten ergreifen bzw. greifen kann.

Gemäß einer Ausführungsform der Entnahmewanne weisen die Ausnehmungen und/oder Einbuchtungen in den Seitenwänden entlang der Längsrichtung der Kabel, wenn sich diese in der Entnahmewanne befinden, eine geringere Breite als verbleibende Rippen der jeweiligen Seitenwand zwischen den Ausnehmungen und/oder Einbuchtungen auf. Vorteilhaft hieran ist, dass die Kabel typischerweise besonders sicher in der Entnahmewanne gehalten werden.

Gemäß einer Ausführungsform des Kabelverarbeitungsmaschinensystems ist die Entnahmewanne gegenüber der Kabelablage entlang einer Längsrichtung der Kabel, wenn sich diese in der Entnahmewanne befinden, verschiebbar ausgebildet. Hierdurch kann die Entnahmewanne typischerweise technisch einfach in eine Position bewegt werden, in der ein Greifarm technisch besonders einfach die Kabel in der Entnahmewanne ergreifen kann. Insbesondere kann die Entnahmewanne üblicherweise an eine Position verschoben werden, in der kein Teil der Kabelmaschine den Greifarm beim Entnehmen der Kabel aus der Entnahmewanne behindert. Somit können die Kabel in der Regel noch schneller maschinell aus der Entnahmewanne entnommen werden, da die Bewegungen des Greifarms schneller durchgeführt werden können.

Gemäß einer Ausführungsform des Kabelverarbeitungsmaschinensystems umfasst das Kabelverarbeitungsmaschinensystem ferner einen Greifarm zum Greifen und Halten der Kabel, wobei die Ausnehmungen und/oder die Einbuchtungen in den Seitenwänden und/oder die Ausnehmungen und/oder die Einbuchtungen in der Bodenfläche zum Aufnehmen eines Teils des Greifarms ausgebildet sind. Vorteilhaft hieran ist, dass die Ausnehmungen und/oder Einbuchtungen typischerweise besonders genau an den Greifarm angepasst sein können oder sind, so dass das Entnehmen der Kabel in der Regel technisch noch einfacher und noch schneller durchgeführt werden kann.

Gemäß einer Ausführungsform des Kabelverarbeitungsmaschinensystems weist der Greifarm zwei Backen mit jeweils zwei Greifhaken auf. Vorteilhaft hieran ist, dass die Kabel durch den Greifarm typischerweise besonders sicher gehalten werden können.

Gemäß einer Ausführungsform des Verfahrens wird während des Greifens der Kabel, die sich in der Entnahmewanne befinden, der Greifarm bis auf zwei Backen des Greifarms, die zum Greifen der Kabel durch den Greifarm aufeinander zu bewegt werden, nicht bewegt. Hierdurch können die Kabel bzw. das Fertigungslos von Kabeln vom Greifarm typischerweise besonders sicher gegriffen bzw. ergriffen werden.

Es wird darauf hingewiesen, dass einige der möglichen Merkmale und Vorteile der Erfindung hierin mit Bezug auf unterschiedliche Ausführungsformen der der Entnahmewanne bzw. des Kabelverarbeitungsmaschinensystems bzw. des Verfahrens beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1 zeigt: eine perspektivische Ansicht einer Ausführungsform des erfindungsgemäßen Kabelverarbeitungsmaschinensystems mit einer Ausführungsform der erfindungsgemäßen Entnahmewanne;
- Fig. 2 zeigt: eine perspektivische Detailansicht der Entnahmewanne aus Fig. 1;
- Fig. 3 zeigt: eine weitere perspektivische Detailansicht der Entnahmewanne aus Fig. 1;
- Fig. 4 zeigt: eine perspektivische Ansicht der Entnahmewanne aus Fig. 1 mit einem Los von Kabeln in der Entnahmewanne und einem Greifarm;
- Fig. 5a zeigt: eine perspektivische Ansicht der Entnahmewanne aus Fig. 4, wobei Backen des Greifarms eine geöffnete Stellung aufweisen; und
- Fig. 5b zeigt: eine perspektivische Ansicht der Entnahmewanne aus Fig. 4, wobei Backen des Greifarms eine geschlossene Stellung aufweisen und das Los von Kabeln greifen.

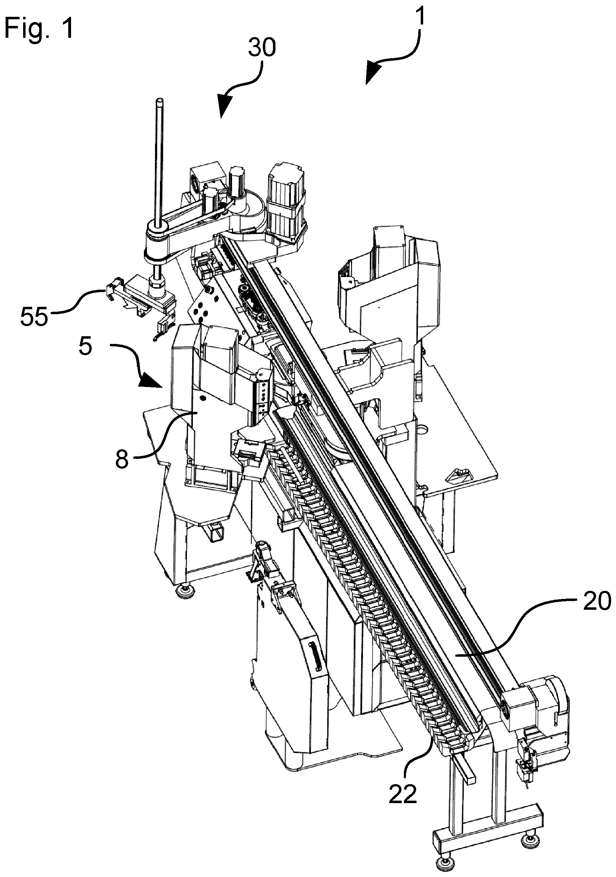

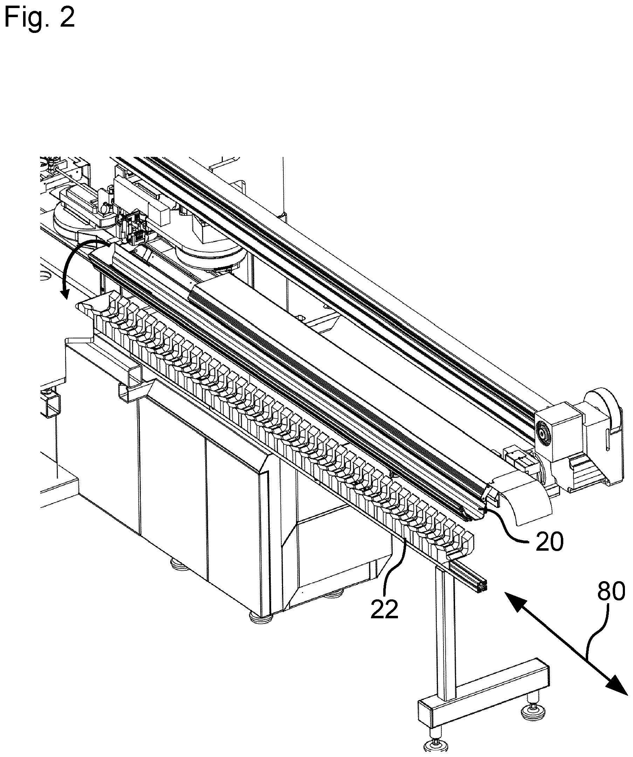

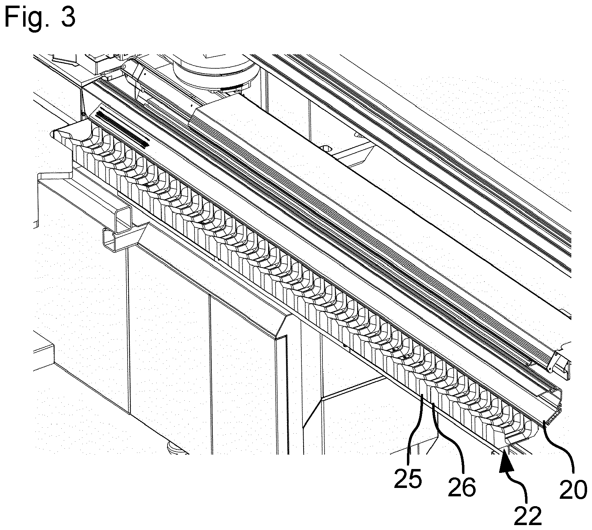

Die Figuren sind lediglich schematisch und nicht maßstabsgetreu. Gleiche Bezugszeichen bezeichnen in den verschiedenen Figuren gleiche oder gleichwirkende Merkmale Fig. 1 zeigt eine perspektivische Ansicht einer Ausführungsform des erfindungsgemäßen Kabelverarbeitungsmaschinensystems 1 mit einer Ausführungsform der erfindungsgemäßen Entnahmewanne 22. Fig. 2 zeigt eine perspektivische Detailansicht der Entnahmewanne 22 aus Fig. 1. Fig. 3 zeigt eine weitere perspektivische Detailansicht der Entnahmewanne 22 aus Fig. 1.

Das Kabelverarbeitungsmaschinensystem 1 umfasst eine Kabelverarbeitungsmaschine 5, einen Handhabungsroboter 30 mit einem Greifarm 55 bzw. maschinellen Greifer und die Entnahmewanne 22. Die Kabelverarbeitungsmaschine 5 kann eine Crimpmaschine bzw. eine Crimppresse 8 zum Verbinden eines Kabels 15 mit einem Crimpkontakt sein.

Das bzw. die von der Kabelverarbeitungsmaschine 5 verarbeitete Kabel 15 gelangt/gelangen in eine Kabelablage 20. Das Kabel 15 bzw. die Kabel 15 wird/werden aus der Kabelablage 20 in die Entnahmewanne 22, die schräg unterhalb der Kabelablage 20 angeordnet ist, geschüttet bzw. bewegt, indem die Kabelablage 20 entlang des Pfeils in Fig. 2 geschwenkt bzw. verschwenkt wird.

Üblicherweise werden mehrere verarbeitete Kabel 15 in der Entnahmewanne 22 gesammelt, bis ein Los, d.h. eine vorgegebene Stückzahl, insbesondere von ähnlich verarbeiteten Kabeln 15, in der Entnahmewanne 22 erreicht wurde. Dann werden die Kabel 15 bzw. das Los von Kabeln 15 entnommen. Es ist auch möglich, dass mehrere Lose von Kabeln 15 an unterschiedlichen Stellen der Entnahmewanne 22 gesammelt werden, bevor die Kabel 15 der Entnahmewanne 22 entnommen werden.

Die Entnahmewanne 22 weist zwei sich gegenüberliegende Seitenwände 34, 35 auf und ist U-förmig ausgebildet. Zwischen den Seitenwänden 34, 35, d.h. in der Mitte der U-Form, ist eine Bodenfläche 28 zum Aufliegen bzw. Halten der Kabel 15 bzw. Lose von Kabeln 15 ausgebildet.

Die Seitenwände 34, 35 weisen jeweils mehrere Ausnehmungen 90 und/oder Vertiefungen bzw. Einbuchtungen auf. D.h. dass die Seitenwände 34, 35 an mehreren Stellen Lücken haben und nicht durchgehend ausgebildet sind. Die Seitenwände 34, 35 weisen somit eine rippenartige Struktur auf. Die Ausnehmungen 90 und/oder Vertiefungen bzw. Einbuchtungen sind äquidistant zueinander ausgebildet. Die Ausnehmungen 90 bzw. Vertiefungen verlaufen senkrecht zu den Kabeln 15, wenn diese in der Entnahmewanne 22 gehalten werden.

Die Ausnehmungen 90 bzw. Vertiefungen der Seitenwände 34, 35 weisen parallel zu der Längsrichtung (der Richtung ihrer größten Erstreckung) der Kabel 15 in der Entnahmewanne 22 eine geringere Breite auf als die verbleibenden Rippen 25, 26 der Seitenwände 34, 35.

In die Ausnehmungen 90 und/oder Vertiefungen der Seitenwände 34, 35 kann ein Teil eins Greifarms 55 bzw. eines maschinellen Greifers eingebracht bzw. eingeführt werden.

Der Greifarm 55 bzw. der maschinelle Greifer ist zum Greifen der Kabel 15 bzw. der Lose von Kabeln 15, die sich in der Entnahmewanne 22 befinden, ausgebildet.

Die Entnahmewanne 22 ist symmetrisch gegenüber einer Symmetrieebene ausgebildet, die senkrecht zum Boden und durch die Kabel 15 bzw. das Los von Kabeln 15 verläuft, wenn sich die Kabel 15 bzw. das Los von Kabeln 15 in der Entnahmewanne 22 auf der Bodenfläche 28 befindet. Somit befinden sich jeweils Rippen 25, 26 der Seitenwände 34, 35 gegenüber als auch Aussparungen bzw. Vertiefungen in den Seitenwänden 34, 35 jeweils gegenüber.

Die Bodenfläche 28, die die Kabel 15 trägt bzw. unterstützt, weist ebenfalls Ausnehmungen 90 und/oder Vertiefungen auf. Dies bedeutet, dass die Bodenfläche 28 durch die Ausnehmungen 90 bzw. Vertiefungen bzw. Einbuchtungen immer wieder unterbrochen ist. Kabel 15 in der Entnahmewanne 22 liegen somit nicht vollflächig bzw. nicht mit ihrer gesamten Unterseite auf der Bodenfläche 28 der Entnahmewanne 22 auf, sondern berühren bzw. kontaktieren mit ihrer Unterseite nur teilweise die Bodenfläche 28 der Entnahmewanne 22.

Die Bodenfläche 28 ist ebenfalls rippenartig ausgebildet.

Die Ausnehmungen 90 und/oder Vertiefungen der Bodenfläche 28 können an der gleichen Stelle entlang der Längsrichtung der Kabel 15, an der Ausnehmungen 90 und/oder Vertiefungen ausgebildet sind, vorhanden sein. Dies bedeutet, dass Rippen 25, 26 der Seitenwände 34, 35 gleichzeitig Rippen 25, 26 der Bodenfläche 28 bilden bzw. sind.

Wie in Fig. 3 gut zu erkennen ist, weist jede Rippe 25, 26 auf zwei gegenüberliegenden Seiten in Richtung der Achse der Kabel 15, wenn sich diese in der Entnahmewanne 22 befinden, Schrägflächen 31 auf, die von der Höhe der Bodenfläche 28, nach unten führen. Zwischen den jeweiligen Rippen 25, 26 der Bodenfläche 28 ist eine Grundfläche 29 ausgebildet, die sich auf einer geringeren Höhe als die Ausgleichsfläche befindet.

Wenn man sich von der Mitte einer Rippe 25 der Entnahmewanne 22 bzw. der Vertiefungsfläche zur Mitte der darauf unmittelbar folgenden Rippe 26 der Entnahmewanne 22 bewegt, befindet man sich zunächst auf der horizontal verlaufenden Bodenfläche 28 der ersten Rippe 25. Dann gelangt man auf die Schrägfläche 31, die von der Bodenfläche 28 nach unten hin verläuft. Daraufhin gelangt man von der Schrägfläche 31 auf die horizontal verlaufende Grundfläche 29, die in eine Richtung parallel zur Achse der Kabel 15, wenn sich diese in der Entnahmewanne 22 befinden, eine größere Breite als die Bodenfläche 28 der Rippe 25, 26 aufweist. Die Grundfläche 29 verläuft parallel zu der Bodenfläche 28, jedoch befindet sie sich auf einer geringeren Höhe. Nach der horizontal verlaufenden Grundfläche 29 gelangt man zu einer Schrägfläche 31 der zu der ersten Rippe 25 unmittelbar benachbarten zweiten Rippe 26. Wenn man dieser Schrägfläche 31 der zweiten Rippe 26 folgt, nimmt die Höhenposition zu bis man wieder auf Höhe der Bodenfläche 28 ist und auf die Bodenfläche 28 der zweiten Rippe 26 gelangt.

Die Seitenwände 34, 35 der Entnahmewanne 22 weisen auf der Innenseite der Entnahmewanne 22 ähnlich ausgebildete Schrägflächen 40 wie die Bodenfläche 28 auf. Die Schrägflächen 40 der Seitenwände 34, 35 führen von parallel zu der Kabelachse (Längsrichtung der Kabel 15, wenn sich diese in der Entnahmewanne 22 befinden) verlaufenden Seitenwandflächen der jeweiligen Rippe 25, 26 zu Randflächen 42 der Rippe 25, 26, die senkrecht zur der Kabelachse verlaufen.

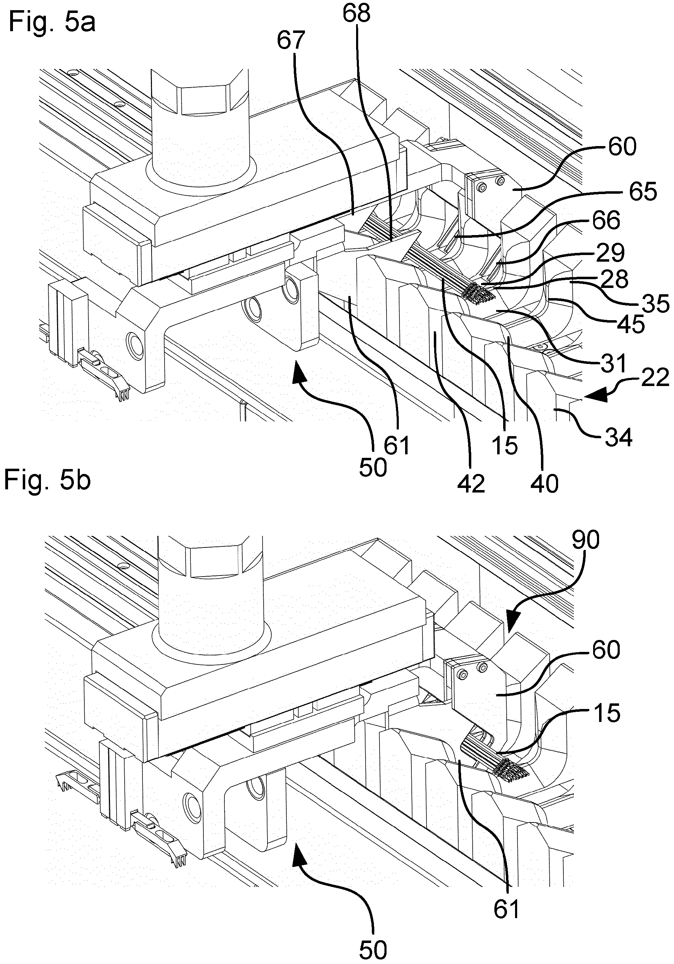

Eine der Seitenwände 34, 35 kann auf ihrer Oberseite unterschiedlich zu der Oberseite der anderen Seitenwand 34, 35 ausgebildet sein. Wie in Fig. 5a gezeigt, weist die Oberseite der linken Seitenwand 34 eine andere Ausbildung auf als die Oberseite der rechten Seitenwand 35.

Die linke Seitenwand 34 weist auf ihrer Oberseite mehrere Flächen auf, wobei eine trapezförmige Fläche der Flächen horizontal verläuft und die drei hierzu benachbarten Flächen in Richtung der Innenseite der Entnahmewanne 22 jeweils schräg nach unten hin verlaufen.

Die Oberseite der rechten Seitenwand 35 weist eine rechteckige, über die gesamte Breite der Rippe 25, 26 verlaufende Fläche auf, die horizontal verläuft. Hierzu in Richtung der Innenseite der Entnahmewanne 22 unmittelbar anschließend ist eine einzige schräge, rechteckige Fläche ausgebildet, die schräg nach unten verläuft. Unmittelbar anschließend an diese rechteckige Fläche in Richtung der Mitte der Rippe 25, 26 ist eine parallel zu der Längsachse der Kabel 15 verlaufende Seitenwandfläche der Seitenwand 34, 35 angeordnet.

Die Bodenfläche 28 der jeweiligen Rippe 25, 26 geht fließend in die Seitenwandflächen der jeweiligen Seitenwände 34, 35 der Rippe 25, 26 über.

Die Grundfläche 29 kann sich jeweils seitlich bis in die Ausnehmungen 90 bzw. Vertiefungen der Seitenwände 34, 35 erstrecken.

Die Ausnehmungen 90 bzw. Vertiefungen sowohl der Seitenwände 34, 35 als auch die Ausnehmungen 90 bzw. Vertiefungen der Bodenfläche 28 sind zum Aufnehmen eines Teils eines Greifarms 55 ausgebildet. D.h. dass ein Teil eines Greifarms 55 in die Ausnehmungen 90 bzw. Vertiefungen eingeführt werden kann.

Der Greifarm 55 kann Teil eines Handhabungsroboters 30 sein, der Kabel 15 in dem Kabelverarbeitungsmaschinensystem 1 handhabt bzw. greift, hält, bewegt und wieder freigibt.

Es ist auch möglich, dass der Greifarm 55 kein Teil eines Handhabungsroboters 30 ist, sondern ein technisch einfach ausgebildeter Greifarm 55 ist, der eine geschlossene Position zum Greifen der Kabel 15 und eine offene Position zum Loslassen bzw. Freigeben der Kabel 15 aufweist und der manuell bewegbar ist.

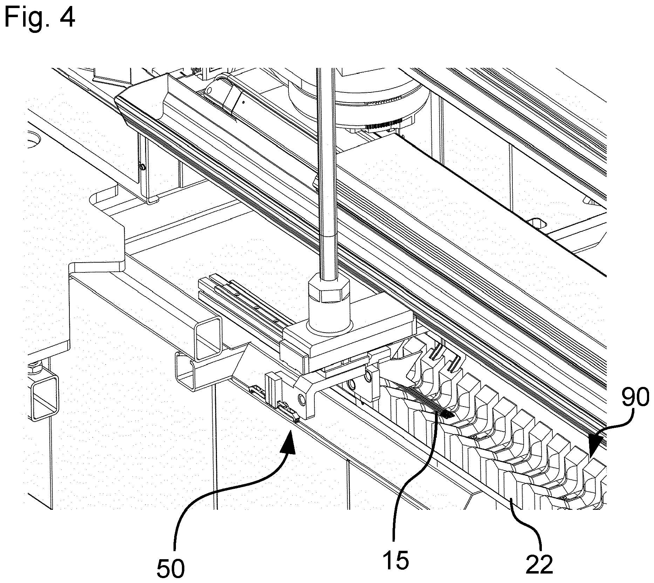

Fig. 4 zeigt eine perspektivische Ansicht der Entnahmewanne 22 aus Fig. 1 mit einem Los von Kabeln 15 in der Entnahmewanne 22 und einem Greifarm 55.

Der Greifarm 55 befindet sich in geöffneter Position, d.h. Backen 60, 61 des Greifarms 55 sind geöffnet bzw. beabstandet zueinander angeordnet. Der Greifarm 55 bzw. die Backen 60, 61 des Greifarms 55 sind oberhalb der Entnahmewanne 22 positioniert. In der Entnahmewanne 22 sind mehrere von der Kabelverarbeitungsmaschine 5 verarbeitete Kabel 15 bzw. ein Los von von der Kabelverarbeitungsmaschine 5 verarbeiteten Kabeln 15. Sie liegen auf mehreren Rippen 25, 26 bzw. auf der von Ausnehmungen 90 bzw. Vertiefungen bzw. Einbuchtungen unterbrochenen Bodenfläche 28.

Jede Backe 60, 61 des Greifarms 55 ist zweigeteilt, d.h. jede Backe 60, 61 umfasst zwei Greifhaken 65-68. Der Abstand der Greifhaken 65-68 entspricht der Breite einer Rippe 25, 26, so dass je ein Greifhaken 65-68 in eine Ausnehmung 90 bzw. Einbuchtung zwischen zwei unmittelbar zueinander benachbarten Rippen 25, 26 eingreift. Möglich ist auch, dass die Greifhaken 65-68 einen Abstand aufweisen, der einem Vielfachen der Breite einer Rippe 25, 26 entspricht.

Fig. 5a zeigt eine perspektivische Ansicht der Entnahmewanne 22 aus Fig. 4, wobei Backen 60, 61 des Greifarms 55 eine geöffnete Stellung aufweisen. Fig. 5b zeigt eine perspektivische Ansicht der Entnahmewanne 22 aus Fig. 4, wobei Backen 60, 61 des Greifarms 55 eine geschlossene Stellung aufweisen und das Los von Kabeln 15 greifen.

Der Greifarm 55 wird nun abgesenkt, so dass Teile des Greifarms 55 bzw. der Backen 60, 61 bzw. der Greifhaken 65-68 in die Ausnehmungen 90 der Seitenwände 34, 35 gelangen. Jeder der vier Greifhaken 65-68 gelangt in eine Ausnehmung 90 bzw. Vertiefung der Seitenwand 34, 35.

Die Breite der Ausnehmung 90 bzw. Einbuchtung entspricht im Wesentlichen der Breite des Greifhakens 65-68 bzw. ist minimal größer als die Breite des Greifhakens 65-68.

Die Seitenwand 34, 35 ist im Bereich der Ausnehmungen 90 bzw. Vertiefungen zur Seite hin offen. Dies bedeutet, dass Teil des Greifarms 55 bzw. der Backen 60, 61 sich außerhalb der Entnahmewanne 22 befinden können und gleichzeitig ein Teil des Greifarms 55 durch die Seitenwand 34, 35 bzw. die Ausnehmungen 90 bzw. Vertiefungen der Seitenwand 34, 35 ragt.

Möglich ist jedoch auch, dass die Seitenwände 34, 35 im Bereich der Ausnehmungen 90 bzw. Vertiefungen nicht zur Seite hin offen sind, so dass der Greifarm 55 bzw. Teile hiervon nur von oben in die Entnahmewanne 22 gelangen kann bzw. können.

Der unterste Teil der Greifhaken 65-68 bzw. der Backen 60, 61 des Greifarms 55 können sich auf Höhe der Grundfläche 29 bzw. nahezu auf Höhe der Grundfläche 29 befinden.

Die Unterseite der Greifhaken 65-68 bzw. der Backen 60, 61 des Greifarms 55 können in Fig. 5a auf der Grundfläche 29 ruhen bzw. diese kontaktieren.

Nun werden die Backen 60, 61 des Greifarms 55 geschlossen bzw. der Greifarm 55 wird aus der in Fig. 5a gezeigten geöffneten Position in die in Fig. 5b gezeigte geschlossene Position überführt. Hierbei wird die Position des Greifarms 55 insgesamt nicht verändert. Die Backen 60, 61 und somit die Greifhaken 65-68 bewegen sich aufeinander zu.

Der untere Teil des Greifhakens 65-68 gleitet bzw. fährt während des Schließvorgangs von der geöffneten Position in die geschlossene Position entlang der Grundfläche 29 bzw. bewegt sich parallel hierzu. Hierdurch gelangt jeweils ein Teil der Backen 60, 61 bzw. der Greifhaken 65-68 unter die Kabel 15 bzw. das Los von Kabeln 15.

Nach dem Schließen bzw. in der geschlossenen Position werden die Kabel 15 bzw. das Los von Kabeln 15 nun von den Backen 60, 61 bzw. Greifhaken 65-68 des Greifarms 55 seitlich und nach unten hin gehalten (d.h. in Richtung von dem Greifarm 55 zu der Grundfläche 29 hin), wie dies in Fig. 5b gezeigt ist.

Nun kann der Greifarm 55 bzw. nun können die Backen 60, 61 des Greifarms 55 nach oben, d.h. weg von der Bodenfläche 28 bzw. Grundfläche 29, bewegt werden und auf diese Weise die Kabel 15 bzw. das Los von Kabeln 15 aus der Entnahmewanne 22 bewegt werden. Die Kabel 15 können von dem Greifarm 55 in eine Kiste transportiert bzw. fallengelassen werden. Es ist auch möglich, dass die Kabel 15 vom Greifarm 55 einem weiteren Greifarm übergeben werden.

Es ist auch möglich, dass in der Entnahmewanne 22 mehrere Lose von Kabeln 15 vorhanden sind, die an unterschiedlichen Positionen entlang der Längsrichtung der Kabel 15 angeordnet sind.

Der Greifer kann auch nur eine Backe 60, 61 aufweisen.

Ebenfalls ist es möglich, dass jede Backe 60, 61 nur einen Greifhaken 65-68 aufweist.

Auch denkbar ist, dass, insbesondere bei längeren verarbeiteten Kabeln 15 in der Entnahmewanne 22, die Kabel 15 bzw. das Los von Kabel 15 von mehreren Greifern an verschiedenen Positionen ergriffen werden. Hierdurch können die Kabel 15 noch sicherer gehalten bzw. aus der Entnahmewanne 22 transportiert werden.

Die Kabel 15 eines Loses weisen üblicherweise die gleiche Länge auf und befinden sich in der Entnahmewanne 22 in Richtung der Kabelachse im Wesentlich an der gleichen Position, wie dies in Fig. 5b beispielhaft gezeigt ist.

Die Entnahmewanne 22 kann aus mehreren Entnahmewannenteilen zusammengesetzt sein. Die Entnahmewannenteile können baugleich zueinander und in sich spiegelsymmetrisch so, so dass kein Vertauschen der Ausrichtung der Entnahmewannenteilen (z.B. vorne/hinten bzw. rechts/links) unbeachtlich ist. Die Entnahmewannenteile können zusammengeschraubt, mit Bolzen verbunden und/oder miteinander verklebt sein.

Eine Reparatur ist bei einer Entnahmewanne 22 aus mehreren Entnahmewannenteilen besonders einfach und kostengünstig, da nur das beschädigte Entnahmewannenteil ausgetauscht werden muss.

Die Entnahmewanne 22 ist wie in Fig. 2 gezeigt auf einer Schiene angeordnet und ist relativ zu der Kabelablage 20 in Richtung der Längsachse der Kabel 15 (die Längsachse verläuft in Richtung ihrer größten Ausdehnung), wenn sich diese in der Entnahmewanne 22 befinden, in Verschiebungsrichtung 80 der Entnahmewanne 22 verschiebbar ausgebildet. Die Verschiebung kann pneumatisch durchgeführt werden. Durch die Verschiebung der Entnahmewanne 22 relativ zu der Kabelablage 20 bzw. der Kabelverarbeitungsmaschine 5 kann die Entnahmewanne 22 in eine Position gebracht werden, in der der Greifarm 55 technisch besonders einfach und schnell die Kabel 15 aus der Entnahmewanne 22 entnehmen kann, da keine Teile der Kabelablage 20 bzw. der Kabelverarbeitungsmaschine 5 im Weg oder in der Nähe des Wegs des Greifarms 55 sind. Somit müssen Bewegungen des Greifarms 55 nicht so präzise ausgeführt werden bzw. die Bewegungen können mit hoher Geschwindigkeit ausgeführt werden, da auch bei den Positionen, an denen die Bewegung des Greifarms 55 angehalten wird, genügend Raum vorhanden ist, sollte sich der Greifarm 55 bzw. Teile hiervon kurzzeitig noch ein Stück weiter bewegen bzw. sollte der Greifarm 55 oder Teiler hiervon vibrieren.

Die Entnahmewanne 22 kann z.B. ein gepresstes Bleichteil sein. Auch ein tiefgezogener Kunststoff ist beispielsweise möglich. Die Ausnehmungen 90 bzw. Vertiefungen werden vorzugsweise bereits bei der Herstellung bzw. Formung der Entnahmewanne 22 ausgebildet, so dass kein Material danach wieder entfernt werden muss.

Vorstellbar ist auch, dass nur jede der beiden Seitenwände 34, 35 eine einzige Einbuchtung bzw. Vertiefung bzw. Ausnehmung 90 aufweist, in die ein Teil des Greifarms 55 eingeführt werden kann.

Der Abstand der Greifhaken 65-68 zueinander entspricht einem Abstand der Ausnehmungen 90 und/oder der Einbuchtungen der Seitenwände 34, 35 bzw. dem Abstand der Ausnehmungen 90 und/oder Einbuchtungen der Bodenfläche 28. Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

### Bezugszeichenliste

- 1: Kabelverarbeitungsmaschinensystem
- 5: Kabelverarbeitungsmaschine
- 8: Crimppresse
- 15: Kabel
- 20: Kabelablage
- 22: Entnahmewanne
- 25, 26: Rippe
- 28: Bodenfläche
- 29: Grundfläche
- 30: Handhabungsroboter
- 31: Schrägfläche der Bodenfläche
- 34, 35: Seitenwand
- 40: Schrägfläche der Seitenwand
- 42: Randfläche der Seitenwand
- 45: Seitenwandfläche der Seitenwand
- 55: Greifarm
- 60, 61: Backen
- 65, 66, 67, 68: Greifhaken
- 80: Verschiebungsrichtung der Entnahmewanne/Längsachse der Kabel
- 90: Ausnehmung

## Patentansprüche

1. Entnahmewanne (22) für ein Kabelverarbeitungsmaschinensystem (1), wobei die Entnahmewanne (22) zum Aufnehmen von von einer Kabelverarbeitungsmaschine (5) des Kabelverarbeitungsmaschinensystems (1) verarbeiten Kabeln (15) ausgebildet ist, wobei Seitenwände (34, 35) der Entnahmewanne (22) jeweils eine oder mehrere Ausnehmungen (90) und/oder Einbuchtungen zum maschinellen Greifen der Kabel (15) in der Entnahmewanne (22) mittels eines Greifarms (55) aufweisen, **dadurch gekennzeichnet, dass** die Ausnehmungen (90) und/oder Einbuchtungen in den Seitenwänden (34, 35) derart ausgebildet sind, dass an den Stellen der Ausnehmungen (90) und/oder Einbuchtungen die Seitenwände (34, 35) jeweils zur Seite hin offen sind.

2. Entnahmewanne (22) nach Anspruch 1, wobei
die Entnahmewanne (22) eine rippenartige Struktur aufweist.

3. Entnahmewanne (22) nach Anspruch 1 oder 2, wobei
die Entnahmewanne (22) eine Vielzahl von Ausnehmungen (90) und/oder Einbuchtungen in den Seitenwänden (34, 35) aufweist, die in der jeweiligen Seitenwand (34, 35) in gleichgroßen Abständen zueinander angeordnet sind.

4. Entnahmewanne (22) nach einem der vorhergehenden Ansprüche, wobei eine Bodenfläche (28) der Entnahmewanne (20), die zum teilweisen Aufliegen der Kabel (15) in der Entnahmewanne (22) ausgebildet ist, insbesondere in zueinander äquidistanten Abständen angeordnete, Ausnehmungen (90) und/oder Einbuchtungen zum maschinellen Ergreifen einer einem Boden der Entnahmewanne (22) zugewandten Seite der Kabel (15) aufweist.

5. Entnahmewanne (22) nach einem der vorhergehenden Ansprüche, wobei
die Entnahmewanne (22) durch Tiefziehen hergestellt wurde.

6. Entnahmewanne (22) nach einem der vorhergehenden Ansprüche, wobei
die Entnahmewanne (22) symmetrisch bezüglich einer Längsebene der Entnahmewanne (22) ausgebildet ist, wobei die Längsebene entlang einer Längsachse der Kabel (15) verläuft, wenn sich die Kabel (15) in der Entnahmewanne (22) befinden.

7. Entnahmewanne (22) nach einem der vorhergehenden Ansprüche, wobei
die Entnahmewanne (22) aus mehreren Entnahmewannenteilen, insbesondere mehreren zueinander baugleichen Entnahmewannenteilen, zusammengesetzt ist.

8. Entnahmewanne (22) nach einem der vorhergehenden Ansprüche, wobei
die Ausnehmungen (90) und/oder Einbuchtungen in den Seitenwänden (34, 35) entlang der Längsrichtung der Kabel (15), wenn sich diese in der Entnahmewanne (22) befinden, eine geringere Breite als verbleibende Rippen (25, 26) der jeweiligen Seitenwand (34, 35) zwischen den Ausnehmungen (90) und/oder Einbuchtungen aufweisen.

9. Kabelverarbeitungsmaschinensystem (1) umfassend
eine Kabelverarbeitungsmaschine (5) zum Verarbeiten eines Kabels (15), und
eine Entnahmewanne (22) nach einem der vorhergehenden Ansprüche, wobei die Entnahmewanne (22) zum Aufnehmen von von der Kabelverarbeitungsmaschine (5) verarbeiteten Kabeln (15) ausgebildet ist, und wobei
die Entnahmewanne (22) derart unterhalb einer Kabelablage (20) der Kabelverarbeitungsmaschinensystem (1) angeordnet ist, dass die Kabel (15) aus der Kabelablage (20) durch Drehen und/oder Schwenken der Kabelablage (20) in die Entnahmewanne (22) gelangen können.

10. Kabelverarbeitungsmaschinensystem (1) nach Anspruch 9, wobei
die Entnahmewanne (22) gegenüber der Kabelablage (20) entlang einer Längsrichtung der Kabel (15), wenn sich diese in der Entnahmewanne (22) befinden, verschiebbar ausgebildet ist.

11. Kabelverarbeitungsmaschinensystem (1) nach Anspruch 9 oder 10, ferner umfassend
einen Greifarm (55) zum Greifen und Halten der Kabel (15),
wobei die Ausnehmungen (90) und/oder die Einbuchtungen den Seitenwänden (34, 35) und/oder die Ausnehmungen (90) und/oder die Einbuchtungen in der Bodenfläche (28) zum Aufnehmen eines Teils des Greifarms (55) ausgebildet sind.

12. Kabelverarbeitungsmaschinensystem (1) nach einem der Ansprüche 9-11, wobei der Greifarm (55) zwei Backen (60, 61) mit jeweils zwei Greifhaken (65, 66, 67, 68) aufweist.

13. Verfahren zum Entnehmen von einem oder mehreren Kabeln (15) aus einer
Entnahmewanne (22) nach einem der Ansprüche 1-8, eines Kabelverarbeitungsmaschinensystems (1), wobei die Entnahmewanne (22) zum Aufnehmen von von einer Kabelverarbeitungsmaschine (5) des Kabelverarbeitungsmaschinensystems (1) verarbeiteten Kabeln (15) ausgebildet und angeordnet ist,
wobei das Verfahren folgende Schritte umfasst:
Bewegen eines Teils des Greifarms (55) in Vertiefungen und/oder Einbuchtungen der Entnahmewanne (22);
Greifen von Kabeln (15), die sich in der Entnahmewanne (22) befinden, mittels des Greifarms (55); und
Bewegen des Greifarms (55) mit den gegriffenen Kabeln (15) aus der Entnahmewanne (22).

14. Verfahren nach Anspruch 13, wobei
während des Greifens der Kabel (15), die sich in der Entnahmewanne (22) befinden, der Greifarm (55) bis auf zwei Backen (60, 61) des Greifarms (55), die zum Greifen der Kabel (15) durch den Greifarm (55) aufeinander zu bewegt werden, nicht bewegt wird.

## Claims

1. A removal trough (22) for a wire processing machine system (1), wherein the removal trough (22) is designed to receive wires (15) processed by a wire processing machine (5) of the wire processing machine system (1), wherein side walls (34, 35) of the removal trough (22) each have one or more recesses (90) and/or indentations for mechanical gripping of the wires (15) in the removal trough (22) by means of a gripping arm (55), **characterized in that** the recesses (90) and/or indentations in the side walls (34, 35) are formed in such a way that, at the locations of the recesses (90) and/or indentations, the side walls(34, 35) are each open to the side.

2. The removal trough (22) according to claim 1, wherein
the removal trough (22) has a rib-like structure.

3. The removal trough (22) according to claim 1 or claim 2, wherein
the removal trough (22) has a plurality of recesses (90) and/or indentations in the side walls (34, 35) which are arranged in the respective side wall (34, 35) at equal distances from each other.

4. The removal trough (22) according to any one of the preceding claims, wherein a bottom surface (28) of the removal trough (20), which is designed for partially resting the wires (15) in the removal trough (22), has recesses (90) and/or indentations in particular arranged at equidistant intervals for the mechanical gripping of a side of the wire (15) facing a bottom of the removal trough (22).

5. The removal trough (22) according to any one of the preceding claims, wherein the removal trough (22) has been produced by deep drawing.

6. The removal trough (22) according to any one of the preceding claims, wherein the removal trough (22) is symmetrical with respect to a longitudinal plane of the removal trough (22), wherein the longitudinal plane runs along a longitudinal axis of the wires (15) when the wires (15) are situated in the removal trough (22).

7. The removal trough (22) according to any one of the preceding claims, wherein the removal trough (22) is composed of several removal trough parts, in particular several removal trough parts which are identical to each other.

8. The removal trough (22) according to any one of the preceding claims, wherein the recesses (90) and/or indentations in the side walls (34, 35) have a lesser width along the longitudinal direction of the wires (15), when these are located in the removal trough (22), than the remaining ribs (25, 26) of the given side wall (34, 35) between the recesses (90) and/or indentations.

9. A wire processing machine system (1) comprising
a wire processing machine (5) for processing a wire (15), and a removal trough (22) according to any one of the preceding claims,
wherein the removal trough (22) is designed for receiving wires (15) processed by the wire processing machine (5), and wherein
the removal trough (22) is arranged below a wire tray (20) of the wire processing machine system (1) in such a way that the wires (15) from the wire tray (20) can arrive in the removal trough (22) through rotation and/or pivoting of the wire tray (20).

10. The wire processing machine system (1) according to claim 9, wherein
the removal trough (22) is designed to be displaceable relative to the wire tray (20) along a longitudinal direction of the wires (15) when they are in the removal trough (22).

11. The wire processing machine system (1) according to claim 9 or 10, further comprising:
a gripping arm (55) for gripping and holding the wires (15),
wherein the recesses (90) and/or the indentations of the side walls (34, 35) and/or the recesses (90) and/or the indentations in the bottom surface (28) are designed for receiving a part of the gripping arm (55) are designed.

12. The wire processing machine system (1) according to any one of claims 9-11, wherein the gripping arm (55) has two jaws (60, 61) each with two gripping hooks (65, 66, 67, 68).

13. A method for removing one or more wires (15) from a removal trough (22) according to any one of claims 1-8 of a wire processing machine system (1), wherein the removal trough (22) is designed and arranged to receive wires (15) processed by a wire processing machine (5) of the wire processing machine system (1),
wherein the method comprises the following steps:
moving a part of the gripping arm (55) into recesses and/or indentations of the removal trough (22);
gripping wires (15) situated in the removal trough (22) by means of the gripping arm (55); and
moving the gripping arm (55) with the gripped wires (15) out of the removal trough (22).

14. The method according to claim 13, wherein
during the gripping of the wires (15) situated in the removal trough (22), the gripping arm (55) is not moved, except for two jaws (60, 61) of the gripping arm (55) which are moved towards each other for gripping the wires (15) by the gripping arm (55).

## Revendications

1. Bac de prélèvement (22) pour un système de machine de traitement de câbles (1), dans lequel le bac de prélèvement (22) est conçu pour recevoir des câbles (15) traités par une machine de traitement de câbles (5) du système de machine de traitement de câbles (1), dans lequel des parois latérales (34, 35) du bac de prélèvement (22) présentent chacune un ou plusieurs évidements (90) et/ou cavités pour la saisie mécanique des câbles (15) dans le bac de prélèvement (22) à l'aide d'un bras de préhension (55), **caractérisé en ce que** les évidements (90) et/ou cavités dans les parois latérales (34, 35) sont conçus de telle sorte que les parois latérales (34, 35) sont ouvertes chacune sur le côté au niveau des emplacements des évidements (90) et/ou cavités.

2. Bac de prélèvement (22) selon la revendication 1, dans lequel le bac de prélèvement (22) présente une structure de type nervure.

3. Bac de prélèvement (22) selon la revendication 1 ou 2, dans lequel
le bac de prélèvement (22) présente une pluralité d'évidements (90) et/ou de cavités dans les parois latérales (34, 35), lesquels sont disposés à égale distance les uns des autres sur la paroi latérale (34, 35) respective.

4. Bac de prélèvement (22) selon l'une des revendications précédentes, dans lequel une surface de plancher (28) du bac de prélèvement (20), laquelle est conçue pour la pose partielle des câbles (15) dans le bac de prélèvement (22), présente des évidements (90) et/ou cavités en particulier disposés équidistants les uns des autres pour la saisie mécanique d'un côté des câbles (15) qui est tourné vers un plancher du bac de prélèvement (22).

5. Bac de prélèvement (22) selon l'une des revendications précédentes, dans lequel le bac de prélèvement (22) a été fabriqué par emboutissage.

6. Bac de prélèvement (22) selon l'une des revendications précédentes, dans lequel le bac de prélèvement (22) est conçu de façon symétrique par rapport à un plan longitudinal du bac de prélèvement (22), dans lequel le plan longitudinal s'étend le long d'un axe longitudinal des câbles (15) lorsque les câbles (15) se trouvent dans le bac de prélèvement (22).

7. Bac de prélèvement (22) selon l'une des revendications précédentes, dans lequel le bac de prélèvement (22) est constitué de plusieurs parties de bac de prélèvement, en particulier des parties de bac de prélèvement de construction identique.

8. Bac de prélèvement (22) selon l'une des revendications précédentes, dans lequel les évidements (90) et/ou cavités dans les parois latérales (34, 35) présentent, le long de la direction longitudinale des câbles (15) lorsque ceux-ci se trouvent dans le bac de prélèvement (22), une largeur plus petite que des nervures (25, 26) restantes des parois latérales (34, 35) respectives entre les évidements (90) et/ou les cavités.

9. Système de machine de traitement de câbles (1) comprenant
une machine de traitement de câbles (5) pour le traitement d'un câble (15), et un bac de prélèvement (22) selon l'une des revendications précédentes,
dans lequel le bac de prélèvement (22) est conçu pour recevoir des câbles (15) traités par la machine de traitement de câbles (5) et dans lequel
le bac de prélèvement (22) est disposé en dessous d'un repose-câble (20) du système de machine de traitement de câbles (1), de telle sorte que les câbles (15) peuvent entrer, hors du repose-câble (20), dans le bac de prélèvement (22) par rotation et/ou pivotement du repose-câble (20).

10. Système de machine de traitement de câbles (1) selon la revendication 9, dans lequel le bac de prélèvement (22) est réalisé déplaçable par rapport au repose-câble (20) le long d'une direction longitudinale des câbles (15) lorsque ceux-ci se trouvent dans le bac de prélèvement (22).

11. Système de machine de traitement de câbles (1) selon la revendication 9 ou 10, comprenant en outre
un bras de préhension (55) pour saisir et tenir les câbles (15),
dans lequel les évidements (90) et/ou les cavités des parois latérales (34, 35) et/ou les évidements (90) et/ou les cavités dans la surface de plancher (28) sont conçus pour recevoir une partie du bras de préhension (55).

12. Système de machine de traitement de câbles (1) selon l'une des revendications 9 à 11, dans lequel le bras de préhension (55) présente deux mâchoires (60, 61) comportant respectivement deux crochets (65, 66, 67, 68).

13. Procédé de prélèvement d'un ou de plusieurs câbles (15) d'un bac de prélèvement (22) selon l'une des revendications 1 à 8 d'un système de machine de traitement de câbles (1), dans lequel le bac de prélèvement (22) est conçu et disposé pour recevoir des câbles (15) traités par la machine de traitement de câbles (5) du système de machine de traitement de câbles (1),
le procédé comprenant les étapes suivantes :
déplacement d'une partie du bras de préhension (55) dans des évidements et/ou des cavités du bac de prélèvement (22) ;
saisie de câbles (15), qui se trouvent dans le bac de prélèvement (22), à l'aide du bras de préhension (55) ; et
déplacement du bras de préhension (55) avec les câbles (15) saisis hors du bac de prélèvement (22).

14. Procédé selon la revendication 13, dans lequel,
pendant la saisie des câbles (15) qui se trouvent dans le bac de prélèvement (22), le bras de préhension (55) n'est pas déplacé, à l'exception de deux mâchoires (60, 61) du bras de préhension (55), lesquelles doivent être déplacées l'une vers l'autre pour la saisie des câbles (15) par le bras de préhension (55).
